# EUROPÄISCHE PATENTSCHRIFT

(11) **EP 3 037 662 B1**
(45) Veröffentlichungstag und Bekanntmachung des Hinweises auf die Patenterteilung: **14.03.2018**
(21) Anmeldenummer: 15200487.5
(22) Anmeldetag: 16.12.2015
(51) Int. Cl.: F04B 17/04, F04B 23/06, F04B 35/04, F04B 49/04, F04B 49/06

(54) **PUMPSYSTEM FÜR GASFÖRMIGE UND FLÜSSIGE MEDIEN**
PUMPING SYSTEM FOR GASEOUS AND LIQUID MEDIA
SYSTÈME DE POMPE POUR MILIEUX LIQUIDES ET GAZEUX

(30) Priorität: 23.12.2014 DE 102014119566
(43) Veröffentlichungstag der Anmeldung: 29.06.2016
(73) Patentinhaber: Rogg, Werner, 78056 Villingen-Schwenningen (DE)
(72) Erfinder: Rogg, Werner, 78056 Villingen-Schwenningen (DE)
(74) Vertreter: Keil & Schaafhausen Patent- und Rechtsanwälte PartGmbB

(56) Entgegenhaltungen:
- EP-A2- 1 985 857
- JP-A- H0 783 171
- JP-A- 2004 245 119
- US-A1- 2011 020 143

## Beschreibung

Die Erfindung betrifft ein Pumpsystem, insbesondere zum Fördern von gasförmigen und/oder flüssigen Medien, wie einem Fluid, aufweisend zwei hydraulisch parallel betriebene Schwingkolbenpumpen, deren Kolben mittels elektromagnetischer Kraftfelder bewegt werden, wobei die elektromagnetischen Kraftfelder in Erregerspulen mittels Halbwellen-Gleichstromimpulse erzeugt werden. Die Erfindung betrifft ferner ein Verfahren zum elektrischen Antreiben von zwei hydraulisch parallel betriebenen Schwingkolbenpumpen sowie eine Schaltungsanordnung für das Pumpsystem bzw. zur Durchführung des Verfahrens.

Schwingkolbenpumpen, auch Schwingmagnetkolbenpumpen genannt, werden in vielen technischen Bereichen, insbesondere zur Förderung von kleineren Durchflussmengen bei Drücken bis zu ca. 20 bar eingesetzt. Die DE 43 08 837 C1 beschreibt beispielsweise ein Verfahren und eine Schaltungsanordnung zur elektrischen Steuerung der Leistung einer Schwingkolbenpumpe. Die Schwingkolbenpumpe umfasst einen einseitig von einer Druckfeder belasteten, ansonsten aber frei in einem Zylinder beweglichen Kolben. Der Kolben wird durch das wechselnde Magnetfeld einer mit Gleichstromimpulsen beaufschlagten Erregerspule in Bewegung versetzt, so dass bei Erregung der Erregerspule der Kolben gegen die Kraft der Druckfeder bewegt wird und sich unter Entlastung der Druckfeder in seine Ausgangsstellung zurückbewegt, wenn in der Erregerspule kein Strom fließt und damit kein Magnetfeld besteht. Die Ansteuerung des Schwingkolbens erfolgt dadurch, dass der Erregerspule ein Gleichrichter bzw. Einweggleichrichterelement, z. B. eine Diode, vorgeschaltet wird, so dass jeweils nur eine Halbwelle der Netzwechselspannung zur Erregerspule durchkommt.

Eine andere Schwingkolbenpumpe ist in der DE 10 2007 007 297 A1 beschrieben. Der Kolben bildet gemeinsam mit einem Ankerkörper einen Anker, der seinerseits von einer Erregerspule umgeben ist. Der Ankerkörper ist gegen die Kraft einer Feder zwischen zwei Endlagen arbeitend angeordnet. Das Anlegen einer Wechselspannung an die Erregerspule führt dazu, dass ein magnetischer Fluss erzeugt und der Kolben axial bewegt wird. In der ersten Halbwelle der sinusförmigen Wechselspannung bewegt sich der Anker durch die magnetische Kraft entgegen der Federkraft, wodurch das Volumen im Kompressionsraum vergrößert wird. Durch den dabei entstehenden Unterdruck öffnet sich ein Einlassventil gegen die Federkraft einer Einlassventilfeder und das Fluid wird im Kompressionsraum angesaugt. Während der zweiten Halbwelle der sinusförmigen Wechselspannung bewegt sich der Anker entgegen der Federkraft eines zweiten Federelements, wodurch das Volumen im Kompressionsraum verkleinert wird. Dabei entsteht ein Überdruck im Kompressionsraum, wobei das Einlassventil schließt und ein Auslassventil gegen die Federkraftwirkung der Auslassventilfeder öffnet. Somit entsteht bei ständiger Bewegung des Ankers ein Flüssigkeitsfluss. Als Halbwelle, auch Halbschwingung genannt, bezeichnet man den Anteil einer insbesondere sinusförmigen Schwingung, der keinen Vorzeichenwechsel enthält. Im Zeitverlauf wechseln sich erste (z.B. die positive) Halbwelle und zweite (z.B. die negative) Halbwelle stetig ab.

Aus Dokument JP H 07 83171 A ist eine Antriebseinheit für elektromagnetische Pumpen bekannt. Die Erregerspulen zweier elektromagnetischer Pumpen sind parallel an eine Wechselstromquelle angeschlossen, und in jedem Zweig der Erregerspulen sind zwei Gleichrichter in Serie zur Erregerspule eingebaut. Ein erster Gleichrichter ist dabei derart angeordnet, dass dessen Kathode mit der Erregerspule der ersten elektromagnetischen Pumpe verbunden ist, wohingegen ein zweiter Gleichrichter derart angeordnet ist, dass dessen Anode mit der Erregerspule der zweiten elektromagnetischen Pumpe verbunden ist. Ein erster Anschluss der Wechselstromquelle ist über den ersten Gleichrichter mit der ersten elektromagnetischen Pumpe verbunden und außerdem über den zweiten Gleichrichter mit der zweiten elektromagnetischen Pumpe verbunden. Ein zweiter Anschluss der Wechselstromstelle ist jeweils direkt mit den Anschlüssen der ersten und der zweiten elektromagnetischen Pumpe verbunden.

Eine Anordnung zweier Gleichrichter in Dokument JP 2004 245119 A ist - äquivalent zu der Anordnung der Gleichrichter in dem zuvor genannten Dokument - derart gestaltet, dass beide Gleichrichter mit einem Ausgang einer Wechselstromquelle verbunden sind, wobei ein anderer Ausgang der Wechselstromquelle direkt mit zwei elektromagnetischen Pumpen verbunden ist.

Aus dem Stand der Technik ist bekannt, Schwingkolbenpumpen hydraulisch parallel zu verschalten, um so eine insgesamt höhere Pumpenleistung zu generieren. Dabei sind eine erste und eine zweite Schwingkolbenpumpe zwischen einem Zulauf und einem Ablauf in je einem Pumpenzweig parallel zueinander angeordnet. Problematisch dabei ist, dass der hierbei erzeugte Durchfluss stets pulsierend erfolgt. Diese pulsierende Strömung lässt sich für industrielle Anwendungen nicht immer sinnvoll und effizient einsetzen. Deshalb werden so genannte Strömungsgleichrichter nachgeschaltet. Diese führen jedoch zu einem aufwendigen System und können eine gleichförmige Durchflussströmung nicht immer garantieren.

Es ist daher Aufgabe der vorliegenden Erfindung die Durchflussströmung parallel betriebener Schwingkolbenpumpensysteme, deren Kolbenbewegung mittels Halbwellen-Gleichstromimpulse erzeugt wird, zu verbessern.

Diese Aufgabe wird durch ein Pumpsystem mit den Merkmalen des Anspruchs 1 gelöst. Ein erfindungsgemäßes Pumpsystem sieht eine an eine Wechselstromquelle anschließbare oder angeschlossene Schaltungsanordnung vor, die zwei parallel geschaltete elektrische Zweige umfasst. Die Zweige sind jeweils an die Erregerspule einer der Schwingkolbenpumpen angeschlossen, so dass die Erregerspulen bzw. die Schwingkolbenpumpen parallel an die Wechselstromquelle bzw. die Wechselspannungsquelle angeschlossen sind. Die Schaltungsanordnung ist derart eingerichtet ist, dass die Erregerspulen elektrisch gegenphasig geschaltet betrieben werden, so dass die Schwingkolbenpumpen mit einer Phasenverschiebung von 180° angetrieben werden. Auf diese Weise lässt sich eine gleichförmige Durchflussströmung erzielen.

Der Wechselstrom bezeichnet dabei einen elektrischen Strom, der seine Richtung (Polung) in regelmäßiger Wiederholung ändert. Das gleiche gilt für die Wechselspannung. Weltweit wird die elektrische Energieversorgung am häufigsten mit sinusförmigem Wechselstrom vorgenommen. In der Europäischen Union liegt die Netzfrequenz der öffentlichen Energieversorgung bei 50 Hz.

Elektrisch gegenphasig kann in diesem Zusammenhang insbesondere dahingehend verstanden werden, dass z.B. der Kolben der einen Schwingkolbenpumpe sich in einem Zustand befindet, während dessen er durch das durch die Erregerspule induzierte Magnetfeld voll zurückgezogen ist, sich also zum Beispiels in der maximalen Rückfahrposition während des Ansaugvorgangs befindet, während sich zeitgleich der Kolben der anderen Schwingkolbenpumpe in einem voll ausgefahrenen Zustand befindet. Das bedeutet, dass die Hin- und Herbewegungen der Kolben auf einer Zeitachse mit einer Phasenverschiebung von 180° stattfinden. Erfindungsgemäß kann die positive Halbwelle des Wechselstroms mit Sinusverlauf zum Bestromen der Erregerspule der einen der Schwingkolbenpumpen genutzt werden, während die negative Halbwelle des Wechselstroms zum Bestromen der Erregerspule der anderen der Schwingkolbenpumpen genutzt wird. Unter Ausnutzung des Wechselstromverhaltens wird die Ansteuerung der Schwingkolbenpumpen in einfacher Weise effizient getaktet. Das mechanische Zusammenwirken bei einer Durchfluss - Parallelschaltung von Kolbenpumpen mit phasenverschobenem hydraulischem Antrieb führt zu einem zusätzlichen Druckanstieg infolge einer auftretenden Strömungsüberlagerung.

Hydraulisch parallel betrieben kann in diesem Zusammenhang insbesondere bedeuten, dass die Schwingkolbenpumpen in hydraulisch parallel zusammengeschalteten Zweigen angeordnet sind und einen gemeinsamen Zulauf und einen gemeinsamen Ablauf aufweisen können.

Besonders zweckmäßig und vorteilhaft ist es, dass erfindungsgemäß im ersten Zweig und im zweiten Zweig jeweils ein in Reihe zu der entsprechenden Erregerspule geschaltetes Gleichrichterelement, wie eine Gleichrichterdiode vorgesehen ist, wobei die Gleichrichterelemente entgegengesetzt gepolt sind. Das bedeutet, dass die Gleichrichterelemente zunächst parallel angeordnet sind, aber in Bezug auf ihre Durchlass- und Sperrrichtung derart angeordnet sind, dass die Gleichrichterelemente antiparallel geschaltet sind. Dabei kann das erste Gleichrichterelement in Durchlassrichtung und das zweite Gleichrichterelement in Sperrrichtung in Bezug auf die Stromflussrichtung geschaltet sein. So kann man die erste Halbwelle des Netzstroms effektiv zum Bestromen der Erregerspule der einen Schwingkolbenpumpe nutzen und die zweite Halbwelle effektiv zum Bestromen der Erregerspule der anderen Schwingkolbenpumpe. Die Gleichrichterelemente lassen jeweils nur eine Halbwelle des Wechselstroms durch, so dass an jeder einzelnen Diode ein pulsierender Gleichstrom mit Unterbrüchen resultiert. Das führt zu phasenverschobener Ansteuerung der Erregerspulen und trägt zu einer kontinuierlichen und höheren Durchflussförderung bei. Ferner erzielt man durch die antiparallele elektrische Beschaltung eine effiziente Strömungsgleichrichtung des geförderten Mediums.

Erfindungsgemäß ist vorgesehen, dass die Schaltungsanordnung einen ersten Anschluss zum Anschließen an einen ersten Wechselstromanschluss der Wechselstromquelle z.B. einen ersten Pol oder eine erste Netzleitung, und einen zweiten Anschluss zum Anschließen an einen zweiten Wechselstromanschluss der Wechselstromquelle z.B. einen zweiten Pol oder eine zweite Netzleitung, aufweist, und dass der erste Anschluss über ein erstes Gleichrichterelement mit einem elektrischen Eingang der Erregerspule der ersten Schwingkolbenpumpe und direkt mit einem elektrischen Ausgang der Erregerspule der zweiten Schwingkolbenpumpe verbunden ist, und dass der zweite Anschluss über ein zweites Gleichrichterelement mit einem elektrischen Eingang der Erregerspule der zweiten Schwingkolbenpumpe und direkt mit einem elektrischen Ausgang der Erregerspule der ersten Schwingkolbenpumpe verbunden ist.

So kann eine erste Netzleitung eines Netzanschlusses, der ein erster Pol zugeordnet ist, mit dem Eingang der Erregerspule der ersten Schwingkolbenpumpe über eine vorzugsweise integrierte Einweggleichrichtung (Diode) der Schwingkolbenpumpe verbunden sein, während gleichzeitig die erste Netzleitung parallel mit dem Ausgang der Erregerspule der zweiten Schwingkolbenpumpe verbunden ist, ohne dass zwischen dem Ausgang der Erregerspule der zweiten Schwingkolbenpumpe und der ersten Netzleitung eine Einweggleichrichtung vorgesehen ist. Dagegen kann die zweite Netzleitung des Netzanschlusses, der ein zweiter Pol zugeordnet ist, mit dem Eingang der Erregerspule der zweiten Schwingkolbenpumpe über eine vorzugsweise integrierte Einweggleichrichtung (Diode) der Schwingkolbenpumpe verbunden sein, während gleichzeitig die zweite Netzleitung parallel mit dem Ausgang der Erregerspule der ersten Schwingkolbenpumpe verbunden ist, ohne dass zwischen dem Ausgang der Erregerspule der ersten Schwingkolbenpumpe und der zweiten Netzleitung eine Einweggleichrichtung vorgesehen ist.

Erfindungsgemäß können der erste und der zweite Wechselstromanschluss auch vertauscht werden, dass bedeutet, die Schaltung kann auch in umgekehrter Reihenfolge betrieben werden. So kann die erste Netzleitung einer ersten Polung des Netzanschluss und die zweite Netzleitung der anderen Polung des Netzleitung zugeordnet sein oder andersherum. Das macht das System besonders sicher.

Nach einer Ausführungsform der Erfindung ist wenigstens ein Rückschlagventil im Hydrauliksystem vorgesehen. Rückschlagventile können beispielsweise in dem gemeinsamen Ablauf vorgesehen sein oder in den hydraulischen Zweigen.

Besonders bevorzugt wird es jedoch, wenn in jedem der hydraulischen Zweige, in denen die Schwingkolbenpumpen angeordnet sind, wenigstens ein Rückschlagventil vorgesehen ist. Es hat sich jedoch als besonders vorteilhaft herausgestellt, wenn in wenigstens einem, vorzugsweise in jedem der hydraulischen Zweige, mehrere, in Serie betriebene Rückschlagventile vorgesehen sind. Eine bevorzugte Ausführungsform sieht daher vor, dass die Schwingkolbenpumpen in parallelen hydraulischen Zweigen angeordnet sind, wobei in den hydraulischen Zweigen mehrere in Serie bzw. seriell betriebene Rückschlagventile vorgesehen sind. Vorzugsweise sind die Rückschlagventile in jedem der hydraulischen Zweige in Flussrichtung des Mediums hinter der jeweiligen Schwingkolbenpumpe angeordnet. Die Rückschlagventile können zumindest teilweise auch in die Schwingkolbenpumpen integriert sein.

Als konstruktiv vorteilhaft erweist es sich ferner, wenn das Rückschlagventil ein Ventilschließelement aufweist, wobei das Ventilschließelement kugel- oder tellerförmig ausgebildet ist.

Erfindungsgemäß können die Schwingkolbenpumpen einen Druckkolben umfassen, der auf einer zentralen Rückführfeder bzw. Rückstellfeder gelagert ist. Die Auslegung des Druckkolbens kann aber auch beidseitig mit je einer Feder erfolgen. Unabhängig davon ist die Schwingkolbenpumpe derart ausgebildet, dass der Kolben in eine Ursprungsposition zurückfährt, wenn die Bestromung der Erregerspule unterbrochen wird. Hierzu können ein oder mehrere Rückführfedern vorgesehen sein. Die Auslegung der Federn ist an den geforderten Durchfluss und Druck anzupassen, dies gilt ebenso für die Erregerspulenleistung.

Vorzugsweise ist der Druckkolben stufenförmig mit einer Zentral- und wenigstens einer Querbohrung versehen.

Die der Erfindung zugrunde liegende Aufgabe wird ferner durch ein Verfahren zum elektrischen Antreiben zweier hydraulisch parallel betriebener Schwingkolbenpumpen, bei einem hierin beschriebenen Pumpsystem, gelöst, wobei das Verfahren vorsieht, dass die Erregerspulen elektrisch gegenphasig geschaltet betrieben werden, so dass die Schwingkolbenpumpen mit einer Phasenverschiebung von 180° angetrieben werden. Dies lässt sich insbesondere durch die hierin beschriebenen Maßnahmen realisieren.

Eine Ausführungsform des erfindungsgemäßen Verfahrens sieht vor, dass die Erregerspulen der ersten und zweiten Schwingkolbenpumpe parallel an eine Wechselstromquelle angeschlossen sind, und dass die erste Halbwelle des Wechselstroms zum Bestromen der Erregerspule der einen der Schwingkolbenpumpen verwendet wird und die zweite Halbwelle des Wechselstroms zum Bestromen der Erregerspule der anderen der Schwingkolbenpumpen verwendet wird. Wie bereits erläutert, kann man durch diese Maßnahmen eine effiziente Steuerung der Schwingkolbenpumpen bewirken.
Besonders zweckmäßig und vorteilhaft ist es, wenn die erste Halbwelle die positive Halbwelle und die zweite Halbwelle die negative Halbwelle des Wechselstroms ist. Es allerdings auch möglich, dass die erste Halbwelle die negative Halbwelle und die zweite Halbwelle die positive Halbwelle des Wechselstroms aus der gleichen Wechselstromquelle ist.
Erfindungsgemäß ist ein erster Wechselstromanschluss der Wechselstromquelle über ein erstes Gleichrichterelement mit einem elektrischen Eingang der Erregerspule der ersten Schwingkolbenpumpe und direkt mit einem elektrischen Ausgang der Erregerspule der zweiten Schwingkolbenpumpe verbunden; und ein zweiter Wechselstromanschluss der Wechselstromquelle über ein zweites Gleichrichterelement mit einem elektrischen Eingang der Erregerspule der zweiten Schwingkolbenpumpe und direkt mit einem elektrischen Ausgang der Erregerspule der ersten Schwingkolbenpumpe verbunden wird.
Eine Schaltungsanordnung für ein hierin beschriebenes Pumpsystem und/oder zur Durchführung des hierin beschriebenen Verfahrens weist die Merkmale auf, die in Bezug auf das Pumpsystem erläutert wurden. Die Schaltungsanordnung kann insbesondere in eine Vorrichtung mit einem Pumpsystem integriert werden und Anschlüsse aufweisen, mit denen die Schaltungsanordnung mit dem Netzstrom verbindbar ist. Natürlich kann die Schaltungsanordnung auch direkt implementiert werden, was gerade für industrielle Anwendungen von Vorteil ist. In diesem Fall werden die Erregerspulen und Dioden direkt an die Stromquelle angeschlossen, ohne dass die Schaltungsanordnung spezielle Verbindungen oder Anschlüsse aufweist.

Die Schaltungsanordnung ist aus zwei parallel geschalteten elektrischen Zweigen aufgebaut, die jeweils an die Erregerspule einer der Schwingkolbenpumpen angeschlossen sind. Die Zweige sind parallel an eine Wechselstromquelle (z.B. einen 50 Hz - Netzstromanschluss) bzw. Wechselspannungsquelle angeschlossen, so dass die Schwingkolbenpumpen über die Schaltungsanordnung elektrisch parallel an die Wechselstromquelle angeschlossen sind. Die Schaltungsanordnung ist derart eingerichtet, dass die Erregerspulen elektrisch gegenphasig geschaltet betrieben werden, so dass die Schwingkolbenpumpen mit einer Phasenverschiebung von 180° angetrieben werden.

Die Schaltungsanordnung ist so aufgebaut, dass im ersten Zweig und im zweiten Zweig jeweils ein in Reihe zu der entsprechenden Erregerspule geschaltetes Gleichrichterelement vorgesehen ist, wobei das Gleichrichterelement des ersten Zweigs und das Gleichrichterelement des zweiten Zweigs entgegengesetzt gepolt sind. Die Schaltung kann so in der einen und der anderen Richtung betrieben werden.

Als besonders vorteilhaft erweist es sich, wenn ein erster Wechselstromanschluss der Wechselstromquelle über ein erstes Gleichrichterelement mit einem elektrischen Eingang der Erregerspule der ersten Schwingkolbenpumpe und direkt mit einem elektrischen Ausgang der Erregerspule der zweiten Schwingkolbenpumpe verbunden ist und ein zweiter Wechselstromanschluss der Wechselstromquelle über ein zweites Gleichrichterelement mit einem elektrischen Eingang der Erregerspule der zweiten Schwingkolbenpumpe und direkt mit einem elektrischen Ausgang der Erregerspule der ersten Schwingkolbenpumpe verbunden ist.

Die Schaltungsanordnung weist einen ersten Anschluss zum Anschließen an einen ersten Wechselstromanschluss der Wechselstromquelle und einen zweiten Anschluss zum Anschließen an einen zweiten Wechselstromanschluss der Wechselstromquelle auf. Der erste Anschluss ist über ein erstes Gleichrichterelement mit einem elektrischen Eingang der Erregerspule der ersten Schwingkolbenpumpe und direkt mit einem elektrischen Ausgang der Erregerspule der zweiten Schwingkolbenpumpe verbunden. Der zweite Anschluss ist über ein zweites Gleichrichterelement mit einem elektrischen Eingang der Erregerspule der zweiten Schwingkolbenpumpe und direkt mit einem elektrischen Ausgang der Erregerspule der ersten Schwingkolbenpumpe verbunden.

Durch die besondere Beschaltung der Pumpen in Art einer Vollwellenschaltung wird eine gleichförmige Durchflussströmung erzielt. So kann durch einfache Maßnahmen (antiparallele elektrische Beschaltung) eine effiziente Strömungsgleichrichtung mit höherem Durchfluss und Druckwerten erzielt werden, indem die Schwingkolbenpumpen phasenverschoben betrieben werden.

Die Schaltungsanordnung beziehungsweise die Schaltungsanordnung des erfindungsgemäßen Pumpsystems kann eine Schalteinrichtung aufweisen. Die Schalteinrichtung kann einen manuellen und/oder automatischen Umschalter aufweisen. Das Pumpsystem sieht hierbei eine an eine Wechselstromquelle anschließbare oder angeschlossene Schaltungsanordnung vor, die zwei parallel geschaltete elektrische Zweige umfasst. Die Zweige sind jeweils an die Erregerspule einer der Schwingkolbenpumpen angeschlossen, so dass die Erregerspulen bzw. die Schwingkolbenpumpen parallel an die Wechselstromquelle bzw. die Wechselspannungsquelle angeschlossen sind und die Schaltungsanordnung ist derart eingerichtet ist, dass die Erregerspulen elektrisch gegenphasig geschaltet betrieben werden können. Die Schaltungsanordnung ist derart eingerichtet, dass von einem 180° phasenverschobenen Betrieb der Schwingkolbenpumpen auf einen elektrisch gleichphasigen Betrieb umgeschaltet werden kann. Die Schaltungsanordnung ist so eingerichtet, dass die Erregerspulen wahlweise elektrisch gegenphasig geschaltet betrieben werden können, so dass die Schwingkolbenpumpen mit einer Phasenverschiebung von 180° angetrieben werden, oder elektrisch gleichphasig geschaltet betrieben werden können, so dass die Schwingkolbenpumpen gleichphasig, also ohne Phasenverschiebung, angetrieben werden.

Durch den gleichphasigen Betrieb der Pumpen entsteht eine impulsartige Strömung des Mediums, was zum Reinigen von verstopften Leitungen genutzt werden kann. Das Umschalten zwischen den Betriebsmodi kann manuell mittels eines Schalters durchgeführt werden. Es hat sich aber als vorteilhaft herausgestellt, wenn ein Sensor zum Messen des Drucks in wenigstens einem Leitungsabschnitt des Pumpsystems oder in einem Leitungsabschnitt eines an das Pumpsystem angeschlossenen Leitungssystems vorgesehen ist. Die Schaltungsanordnung kann so eingerichtet sein, dass der Betriebsmodus des Pumpsystems vom 180° phasenverschobenen Betrieb der Pumpen auf einen gleichphasigen Betrieb der Pumpen umgeschaltet wird, sobald der Druck in der Leitung, z.B. aufgrund einer Verstopfung, einen Schwellwert überschreitet. Idealerweise wird der Betriebsmodus des Pumpsystems wieder auf einen 180° phasenverschobenen Betrieb der Pumpen umgeschaltet, wenn die Verstopfung beseitigt und der Druck wieder unter den Schwellwert gesunken ist.

Die Schalteinrichtung kann in die hierin beschriebene Schaltungsanordnung bzw. in die hierin beschriebene Schaltungsanordnung des Pumpsystems für den phasenverschobenen Betrieb einfach integriert werden. So weist die Schaltungsanordnung einen ersten Anschluss zum Anschließen an einen ersten Wechselstromanschluss der Wechselstromquelle und einen zweiten Anschluss zum Anschließen an einen zweiten Wechselstromanschluss der Wechselstromquelle auf, wobei die Schalteinrichtung zumindest zwischen zwei Schaltzuständen schaltbar ist. Die Schalteinrichtung ist so ausgebildet ist, dass in einem ersten Schaltzustand der erste Anschluss über ein erstes Gleichrichterelement mit einem elektrischen Eingang der Erregerspule der ersten Schwingkolbenpumpe und direkt mit einem elektrischen Ausgang der Erregerspule der zweiten Schwingkolbenpumpe verbunden ist und dass der zweite Anschluss über ein zweites Gleichrichterelement mit einem elektrischen Eingang der Erregerspule der zweiten Schwingkolbenpumpe und direkt mit einem elektrischen Ausgang der Erregerspule der ersten Schwingkolbenpumpe verbunden ist. In einem zweiten Schaltzustand ist einer des ersten und des zweiten Anschlusses über das erste Gleichrichterelement mit dem elektrischen Eingang der Erregerspule der ersten Schwingkolbenpumpe und über das zweite Gleichrichterelement mit dem elektrischen Eingang der Erregerspule der zweiten Schwingkolbenpumpe verbunden, wobei der andere des ersten und des zweiten Anschlusses direkt mit dem jeweiligen elektrischen Ausgang der beiden Erregerspulen, also mit dem Ausgang der ersten Erregerspule und mit dem Ausgang der zweiten Erregerspule, verbunden ist. Die Sperr- und Durchlassrichtungen des ersten und zweiten Gleichrichterelements sind so gleichschaltet und die beiden Erregerspulen werden durch die gleiche Halbwelle des Wechselstroms angetrieben.

In dem zweiten Schaltzustand kann beispielsweise der erste Anschluss über das erste Gleichrichterelement mit dem elektrischen Eingang der Erregerspule der ersten Schwingkolbenpumpe und über das zweite Gleichrichterelement mit dem elektrischen Eingang der Erregerspule der zweiten Schwingkolbenpumpe verbunden sein, während der zweite Anschluss direkt mit dem elektrischen Ausgang der Erregerspule der ersten Schwingkolbenpumpe und direkt mit dem elektrischen Ausgang der Erregerspule der zweiten Schwingkolbenpumpe verbunden ist.

Es auch möglich, dass in dem zweiten Schaltzustand der zweite Anschluss über das erste Gleichrichterelement mit dem elektrischen Eingang der Erregerspule der ersten Schwingkolbenpumpe und über das zweite Gleichrichterelement mit dem elektrischen Eingang der Erregerspule der zweiten Schwingkolbenpumpe verbunden ist, während der erste Anschluss direkt mit dem elektrischen Ausgang der Erregerspule der ersten Schwingkolbenpumpe und direkt mit dem elektrischen Ausgang der Erregerspule der zweiten Schwingkolbenpumpe verbunden ist.

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen:
- Fig. 1: ein Pumpsystem nach einer ersten Ausführungsform der Erfindung;
- Fig. 2: eine Schaltungsanordnung nach einer ersten Ausführungsform der Erfindung;
- Fig. 3a-d: die phasenverschobene Erregung der Erregerspulen; und
- Fig. 4a,: b eine Schaltungsanordnung nach einer weiteren Ausführungsform der Erfindung.

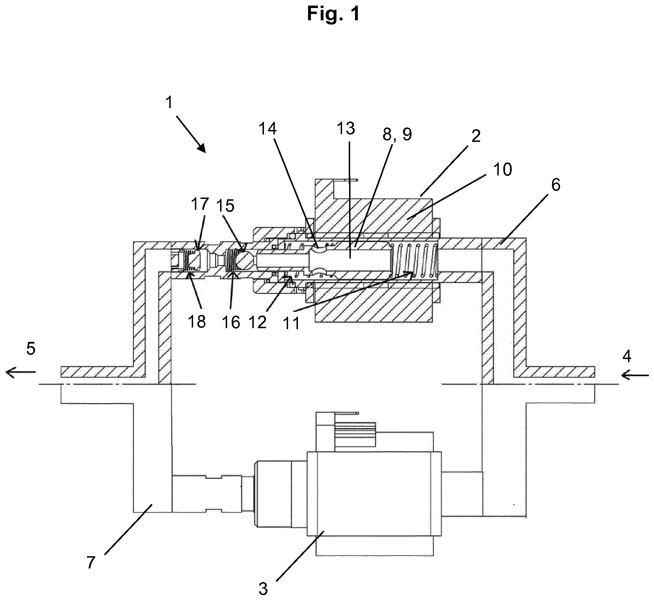

Figur 1 zeigt ein Pumpensystem 1 mit zwei hydraulisch parallel betriebenen Schwingkolbenpumpen 2, 3, die zwischen einem Zulauf 4 und einem Ablauf 5 in je einem Pumpenzweig 6, 7 parallel geschaltet sind. Die obere Schwingkolbenpumpe 2 und der obere Pumpenzweig 6 sind in der Schnittansicht dargestellt, die untere Schwingkolbenpumpe 3 und der untere Pumpenzweig 7 sind in der Draufsicht dargestellt, entsprechen baulich jedoch der Schwingkolbenpumpe 2 und dem Pumpenzweig 6.

Die Pumpen 2, 3 umfassen jeweils einen axial verschiebbaren Kolben 8 mit einem Ankerelement 9 sowie eine Erregerspule 10. Der Kolben 8 ist in einer ersten axialen Richtung an einer ersten Rückstellfeder 11 (Druckfeder) und in entgegengesetzter Richtung an einer zweiten Rückstellfeder 12 (Druckfeder) gelagert.

Der Kolben 8 ist stufenförmig mit einer Zentralbohrung 13 und zwei Querbohrungen 14 versehen. Ein erstes Ventil 15 umfasst eine durch eine Feder 16 gelagerte Kugel. Ein zweites Ventil 17 umfasst einen durch eine Feder 16 gelagerten Tellerschieber. Die Ventile dienen als Rückschlagventile.

Durch Hin- und Herbewegen des Kolbens 8 und durch das Zusammenspiel der Ventile 15, 17 wird stoßweise das Fluid vom Zulauf 4 zum Ablauf 5 gepumpt. Wenn die Erregerspule 10 bestromt wird, wird der Kolben 8 über den Anker axial nach rechts bewegt und komprimiert die Feder 11. Wenn die Bestromung der Erregerspule 10 unterbrochen wird, wird der Kolben 8 durch die Kraft der komprimierten Feder 11 wieder nach links bewegt, wodurch ein Medium (hier ein Fluid) des hydraulischen System nach links gepresst wird. Das gilt auch für die Schwingkolbenpumpe 3.

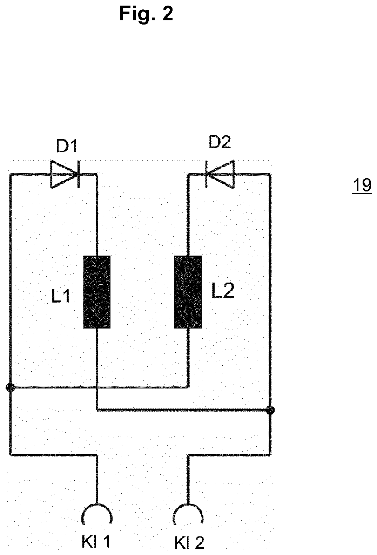

Zur phasenweisen Erregung der Erregerspulen in den Schwingkolbenpumpen 2, 3 ist eine Schaltungsanordnung vorgesehen, die in Figur 2 dargestellt ist. Die Schaltungsanordnung ist an ein 50 Hz-Wechselstromnetz angeschlossen. Das Wechselstromnetz umfasst eine erste Netzleitung KI1 und eine zweite Netzleitung KI2, die unterschiedlich gepolt sind. Das Wechselstromnetz gibt einen Wechselstrom mit sinusförmigem Verlauf aus.

Mit L1 ist die Erregerspule 10 (Figur 1) der ersten Schwingkolbenpumpe 2 gekennzeichnet. L2 kennzeichnet die Erregerspule der zweiten Schwingkolbenpumpe 3. Die Erregerspulen L1 und L2 sind parallel geschaltet an die Netzleitungen KI1 und KI2 (Wechselstromanschlüsse) angeschlossen. Somit umfasst die Schaltungsanordnung zwei parallel geschaltete elektrische Zweige, wobei jeder der Zweige an eine der Erregerspulen L1 und L2 angeschlossen ist.

Die erste Erregerspule L1 weist an ihrem Eingang eine integrierte Gleichrichterdiode D1 auf, so dass der durch die Erregerspule L1 gebildete erste elektrische Zweig eine in Reihe zu der Erregerspule L1 geschaltete Diode D1 aufweist. Die erste Netzleitung KI1 ist mit dem Eingang der Erregerspule L1 der ersten Schwingkolbenpumpe über die integrierte Einweggleichrichtung D1 verbunden. Gleichzeitig ist die erste Netzleitung KI1 parallel mit dem Ausgang der zweiten Erregerspule L2 verbunden. Der Ausgang der zweiten Erregerspule L2 weist keine integrierte Einweggleichrichtung auf, was bedeutet, dass die Erregerspule direkt mit der ersten Netzleitung KI1 verbunden ist.

Die zweite Erregerspule L2 weist an ihrem Eingang eine integrierte Gleichrichterdiode D2 auf, so dass der durch die Erregerspule L2 gebildete zweite elektrische Zweig eine in Reihe zu der Erregerspule L2 geschaltete Diode D2 aufweist Die zweite Netzleitung KI2 ist mit dem Eingang der Erregerspule L2 der zweiten Schwingkolbenpumpe über die integrierte Einweggleichrichtung D2 verbunden. Gleichzeitig ist die zweite Netzleitung KI2 parallel mit dem Ausgang der ersten Erregerspule L1 verbunden. Der Ausgang der ersten Erregerspule L1 weist keine integrierte Einweggleichrichtung auf, was bedeutet, dass die Erregerspule L1 direkt mit der zweiten Netzleitung KI2 verbunden ist.

Die Dioden D1 und D2 sind in Bezug auf die Netzleitungen KI1 und KI 2 antiparallel geschaltet, bzw. entgegengesetzt gepolt. Das bedeutet, Sperrrichtung und Durchlassrichtung sind entgegengesetzt ausgerichtet. Fließt der Strom von KI1 kommend, liegt D1 in Durchlassrichtung und D2 in Sperrrichtung. Fließt der Strom dagegen von KI2 kommen, verhält es sich andersherum.

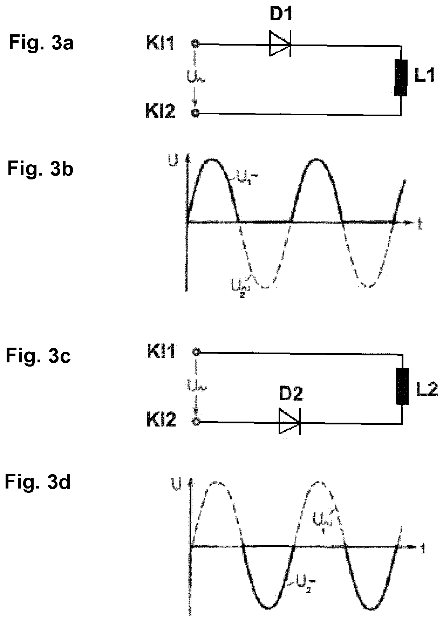

Die Figuren 3a bis 3d zeigen die wechselweise Erregung der ersten und zweiten Erregerspulen L1 und L2. Figur 3a zeigt den an das Netz angeschlossenen ersten Zweig der Erregerspule L1 mit in Reihe geschalteter Diode D1. Figur 3b zeigt den Spannungsverlauf U sinusförmiger Wechselspannung - entsprechend ist die Stromkennlinie phasenverschoben nachlaufend - am Ausgang der Diode D1. Figur 3c zeigt den an das Netz angeschlossenen zweiten Zweig der Erregerspule L2 mit in Reihe geschalteter Diode D2. Figur 3d zeigt den Spannungsverlauf U sinusförmiger Wechselspannung am Ausgang der Diode D2. Durch die antiparallele Anordnung der Dioden D1 und D2 lässt die Diode D1 nur die positiven Halbwellen U1 der Netzspannung - und damit des Stroms - durch die Erregerspule L1 fließen. Die Diode D2 lässt dagegen nur die negativen Halbewellen U2 der Netzspannung durch die Erregerspule L2 fließen. Infolge dessen wird der Netzstrom bzw. die Netzspannung phasenweise zwischen den Erregerspule L1 und L2 aufgeteilt. Während der Phasen der positiven Halbwellen wird der Kolben in der ersten Schwingkolbenpumpe durch die Erregerspule L1 bewegt, wogegen der Kolben in der Phase der negativen Halbwellen durch die Feder zurückstellt wird. Bei der anderen Schwingkolbenpumpe verhält es sich genau entgegengesetzt. Während der Phasen der positiven Halbwellen wird der Kolben in der zweiten Schwingkolbenpumpe durch die Feder zurückstellt, wogegen der Kolben in der Phase der negativen Halbwellen durch die Erregerspule L2 bewegt wird.

Die in der Figur 2 gezeigte Schaltung kann auch andersherum erfolgen, indem KI1 und KI2 vertauscht werden. In diesem Fall wird die Erregerspule L1 nur während der Phasen der negativen Halbwellen bestromt und die Erregerspule L2 wird nur während der Phasen der positiven Halbwellen bestromt.

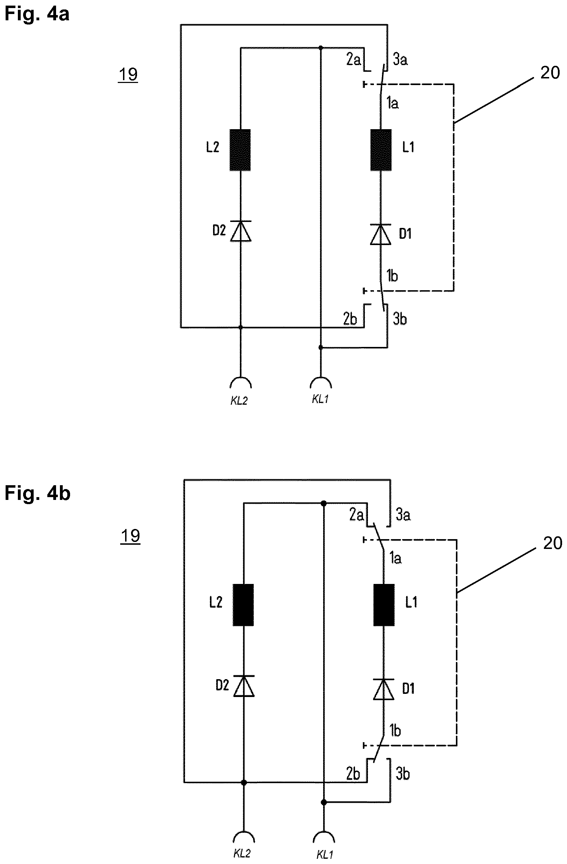

Die in den Figuren 4a und 4b dargestellte Schaltungsanordnung weist eine integrierte Schalteinrichtung 20 auf. Mittels der Schalteinrichtung 20 kann der Betriebszustand des Pumpsystems von einem phasenverschobenen Betrieb auf einen phasengleichen Betrieb umgeschaltet werden, bei dem die Pumpen synchron laufen. Die Schaltungsanordnung 19 ist hier ebenfalls an ein 50 Hz-Wechselstromnetz mit einer ersten Netzleitung KI1 und einer zweiten Netzleitung KI2, die unterschiedlich gepolt sind, angeschlossen. Das Wechselstromnetz gibt einen Wechselstrom mit sinusförmigem Verlauf aus.

Die Bauteile L1, L2, D1 und D2 entsprechend den in der Figur 2 gezeigten Bauteilen.

Die erste Erregerspule L1 weist an ihrem Eingang eine integrierte Gleichrichterdiode D1 auf und die zweite Erregerspule L2 weist an ihrem Eingang die Gleichrichterdiode D2 auf.

Die Schalteinrichtung 20 ist zwischen zwei Zustanden schaltbar. In einem ersten Zustand, der in Figur 4a dargestellt ist, verbindet die Schalteinrichtung 20 die erste Netzleitung KI1 mit dem Eingang der Erregerspule L1 der ersten Schwingkolbenpumpe über die integrierte Einweggleichrichtung D1 (Verbindung 1b-3b) und den Ausgang der Erregerspule L1 direkt mit KI2 (Verbindung 1a-3a). Der Ausgang der Erregerspule L2 ist direkt mit KI1 verbunden. Gleichzeitig ist die zweite Netzleitung KI2 mit dem Eingang der Erregerspule L2 der zweiten Schwingkolbenpumpe über die integrierte Einweggleichrichtung D2 verbunden, und die zweite Netzleitung KI2 ist parallel mit dem Ausgang der ersten Erregerspule L1 verbunden.

Im ersten Schaltzustand entspricht die Verschaltung der Bauteile der Anordnung in Figur 2. Der zweite Schaltzustand ist in Figur 4b dargestellt. Durch Umschalten der Schalteinrichtung 20 wird der der zweite Netzanschluss KI2 von dem Ausgang der ersten Erregerspule L1 getrennt und der Ausgang der ersten Erregerspule L1 wird mit direkt mit dem ersten Netzanschluss KI1 (Verbindung 1a-2a) verbunden. Ferner wird die Verbindung zwischen der Einweggleichrichtung D1 und dem Netzanschluss KI1 getrennt und die Einweggleichrichtung D1 wird mit den Netzanschluss KI2 verbunden (Verbindung 1b-2b). Der Anschluss der zweiten Erregerspule L2 an die Netzanschlüsse KI1 und KI2 bleibt unverändert. Durch das Umschalten ist die erste Erregerspule L1 genauso an die Netzanschlüsse KI1 und KI2 angeschlossen wie die zweite Erregerspule.

Im ersten Schaltzustand (Figur 4a) der Schalteinrichtung 20 sind die Dioden D1 und D2 in Bezug auf die Netzleitungen KI1 und KI2 antiparallel geschaltet, bzw. entgegengesetzt gepolt. Das bedeutet, Sperrrichtung und Durchlassrichtung sind entgegengesetzt ausgerichtet. Fließt der Strom von KI1 kommend, liegt D1 in Durchlassrichtung und D2 in Sperrrichtung. Fließt der Strom dagegen von KI2 kommen, verhält es sich andersherum. Dadurch wird der phasenverschobene Betrieb generiert.

Im zweiten Schaltzustand (Figur 4b) der Schalteinrichtung 20 sind die Dioden D1 und D2 in Bezug auf die Netzleitungen KI1 und KI2 in gleiche Richtungen geschaltet gepolt. Das bedeutet, Sperrrichtung und Durchlassrichtung sind in die gleiche Richtung ausgerichtet. Fließt der Strom von KI1 kommend, liegen D1 und D2 in Sperrrichtung. Fließt der Strom von KI2 kommend, verhält es sich andersherum. Dadurch wird der phasengleiche Betrieb generiert und die hydraulisch parallel geschalteten Pumpen erzeugten eine impulsartige Strömung des gasförmigen oder flüssigen Mediums.

### Bezugszeichenliste

- 1: Pumpsystem
- 2: Schwingkolbenpumpe
- 3: Schwingkolbenpumpe
- 4: Zulauf
- 5: Ablauf
- 6: Pumpenzweig
- 7: Pumpenzweig
- 8: Kolben
- 9: Anker
- 10: Erregerspule
- 11: Rückstellfeder
- 12: Feder
- 13: Zentralbohrung
- 14: Querbohrung
- 15: Ventil
- 16: Feder
- 17: Ventil
- 18: Feder
- 19: Schaltungsanordnung
- 20: Schalteinrichtung

- KI1: erste Netzleitung
- KI2: zweite Netzleitung
- L1: erste Erregerspule
- L2: zweite Erregerspule
- D1: erste Gleichrichterdiode
- D2: zweite Gleichrichterdiode

## Patentansprüche

1. Pumpsystem (1), insbesondere zum Fördern von gasförmigen und/oder flüssigen Medien, aufweisend zwei hydraulisch parallel betriebene Schwingkolbenpumpen (2, 3), deren Kolben (8) mittels elektromagnetischer Kraftfelder bewegt werden, wobei die Schwingkolbenpumpen (2, 3) Erregerspulen (10, L1, L2) aufweisen und wobei die elektromagnetischen Kraftfelder in den Erregerspulen (10, L1, L2) mittels Halbwellen-Gleichstromimpulse erzeugt werden,
wobei eine an eine Wechselstromquelle anschließbare Schaltungsanordnung (19) vorgesehen ist, welche zwei parallel geschaltete elektrische Zweige umfasst, die jeweils an die Erregerspule (L1, L2) einer der Schwingkolbenpumpen (2, 3) angeschlossen sind, wobei die Schaltungsanordnung (19) derart eingerichtet ist, dass die Erregerspulen (10, L1, L2) elektrisch gegenphasig geschaltet betrieben werden, so dass die Schwingkolbenpumpen (2, 3) mit einer Phasenverschiebung von 180° angetrieben werden und
im ersten Zweig und im zweiten Zweig jeweils ein in Reihe zu der entsprechenden Erregerspule (10, L1, L2) geschaltetes Gleichrichterelement (D1, D2) vorgesehen ist, wobei die Gleichrichterelemente (D1, D2) entgegengesetzt gepolt sind,
**dadurch gekennzeichnet, dass** die Schaltungsanordnung (19) einen ersten Anschluss zum Anschließen an einen ersten Wechselstromanschluss (KI1) der Wechselstromquelle und einen zweiten Anschluss zum Anschließen an einen zweiten Wechselstromanschluss (KI2) der Wechselstromquelle aufweist, und dass der erste Anschluss über ein erstes Gleichrichterelement (D1) mit einem elektrischen Eingang der Erregerspule (L1) der ersten Schwingkolbenpumpe (2) und direkt mit einem elektrischen Ausgang der Erregerspule (L2) der zweiten Schwingkolbenpumpe (3) verbunden ist; und dass der zweite Anschluss über ein zweites Gleichrichterelement (D2) mit einem elektrischen Eingang der Erregerspule (L2) der zweiten Schwingkolbenpumpe (3) und direkt mit einem elektrischen Ausgang der Erregerspule (L1) der ersten Schwingkolbenpumpe (2) verbunden ist.

2. Pumpsystem nach Anspruch 1, **dadurch gekennzeichnet, dass** die Schaltungsanordnung (19) eine integrierte Schalteinrichtung (20) aufweist, die derart eingerichtet ist, dass von einem 180° phasenverschobenen Betrieb der Schwingkolbenpumpen (2, 3) auf einen elektrisch gleichphasigen Betrieb umgeschaltet werden kann.

3. Pumpsystem nach Anspruch 2, **dadurch gekennzeichnet, dass** die Schaltungsanordnung (19) einen ersten Anschluss zum Anschließen an einen ersten Wechselstromanschluss (KI1) der Wechselstromquelle und einen zweiten Anschluss zum Anschließen an einen zweiten Wechselstromanschluss (KI2) der Wechselstromquelle aufweist, wobei die Schalteinrichtung (20) zumindest zwischen zwei Schaltzuständen schaltbar ist und so ausgebildet ist, dass
in dem ersten Schaltzustand der erste Anschluss über ein erstes Gleichrichterelement (D1) mit einem elektrischen Eingang der Erregerspule (L1) der ersten Schwingkolbenpumpe (2) und direkt mit einem elektrischen Ausgang der Erregerspule (L2) der zweiten Schwingkolbenpumpe (3) verbunden ist; und dass der zweite Anschluss über ein zweites Gleichrichterelement (D2) mit einem elektrischen Eingang der Erregerspule (L2) der zweiten Schwingkolbenpumpe (3) und direkt mit einem elektrischen Ausgang der Erregerspule (L1) der ersten Schwingkolbenpumpe (2) verbunden ist; und dass
in dem zweiten Schaltzustand einer des ersten und des zweiten Anschlusses über das erste Gleichrichterelement (D1) mit dem elektrischen Eingang der Erregerspule (L1) der ersten Schwingkolbenpumpe (2) und über das zweite Gleichrichterelement (D2) mit dem elektrischen Eingang der Erregerspule (L2) der zweiten Schwingkolbenpumpe (3) verbunden ist, wobei der andere des ersten und des zweiten Anschlusses direkt mit dem elektrischen Ausgang der ersten und der zweiten Erregerspule (L1, L2) verbunden ist.

4. Pumpsystem nach einem der vorhergehenden Ansprüche, **dadurch gekennzeichnet, dass** wenigstens ein Rückschlagventil (15, 17) im Hydrauliksystem vorgesehen ist.

5. Pumpsystem nach Anspruch 4, **dadurch gekennzeichnet, dass** die Schwingkolbenpumpen (2, 3) jeweils in einem hydraulischen Zweig angeordnet sind und wenigstens einer der hydraulischen Zweige ein oder mehrere, in Serie betriebene Rückschlagventile (15, 17) aufweist.

6. Pumpsystem nach Anspruch 4 oder 5, **dadurch gekennzeichnet, dass** das Rückschlagventil (15, 17) ein Ventilschließelement aufweist, wobei das Ventilschließelement kugel- oder tellerförmig ausgebildet ist.

7. Pumpsystem nach einem der vorhergehenden Ansprüche, **dadurch gekennzeichnet, dass** die Schwingkolbenpumpen (2, 3) einen Druckkolben (8) umfassen, der auf einer zentralen Rückstellfeder (11) gelagert ist.

8. Verfahren zum elektrischen Antreiben zweier hydraulisch parallel betriebener Schwingkolbenpumpen (2, 3), bei einem Pumpsystem nach einem der Ansprüche 1 bis 7, wobei Kolben (8) der Schwingkolbenpumpen (2, 3) mittels elektromagnetischer Kraftfelder bewegt werden, wobei die elektromagnetischen Kraftfelder in Erregerspulen (10, L1, L2) mittels Halbwellen-Gleichstromimpulse erzeugt werden, **dadurch gekennzeichnet, dass** die Erregerspulen (10, L1, L2) elektrisch gegenphasig geschaltet betrieben werden, so dass die Schwingkolbenpumpen (2, 3) mit einer Phasenverschiebung von 180° angetrieben werden.

9. Verfahren nach Anspruch 8, **dadurch gekennzeichnet, dass** die Erregerspulen (L1, L2) der ersten und zweiten Schwingkolbenpumpe (2, 3) parallel an eine Wechselstromquelle angeschlossen sind, und dass die erste Halbwelle des Wechselstroms zum Bestromen der Erregerspule (L1, L2) der einen der Schwingkolbenpumpen (2, 3) verwendet wird und die zweite Halbwelle des Wechselstroms zum Bestromen der Erregerspule (L1, L2) der anderen der Schwingkolbenpumpen (2, 3) verwendet wird.

10. Verfahren nach Anspruch 8 oder 9, **dadurch gekennzeichnet, dass** die erste Halbwelle die positive Halbwelle und die zweite Halbwelle die negative Halbwelle des Wechselstroms ist oder dass die erste Halbwelle die negative Halbwelle und die zweite Halbwelle die positive Halbwelle des Wechselstroms ist.

## Claims

1. A pumping system (1), in particular, for transporting gaseous and/or liquid media having two parallel hydraulically operated oscillating piston pumps (2, 3), whose pistons (8) are moved by means of electromagnetic fields, wherein the oscillating piston pumps (2, 3) comprise field coils (10, L1, L2) and wherein the electromagnetic fields are generated in the field coils (10, L1, L2) by means of half-wave direct current pulse,
wherein a circuit arrangement (19) is provided that can be connected to an alternating current source and which has two electric branches connected in parallel that are respectively connected with the field coil (L1, L2) of one of the oscillating piston pumps (2, 3), wherein the circuit arrangement (19) is equipped in such a way that the field coils (10, L1, L2) are operated electrically out of phase so that the oscillating piston pumps (2, 3) are operated with a phase displacement of 180° and in the first branch and in the second branch a rectifier element (D1, D2) is provided that is respectively connected in series to the corresponding field coil (10, L1, L2), wherein the rectifier elements (D1, D2) are poled opposite
**characterized in that** the circuit arrangement (19) has a first connection for connecting to a first alternating current connection (KI1) of the alternating current source and a second connection for connecting to a second alternating current connection (KI2) of the alternating current source, and that the first connection is connected via a first rectifier element (D1) with an electric inlet of the field coil (L1) of the first oscillating piston pump (2) and directly with an electric outlet of the field coil (L2) of the second oscillating piston pump (3); and that the second connection is connected via a second rectifier element (D2) with an electric inlet of the field coil (L2) of the second oscillating piston pump (3) and directly with an electric outlet of the field coil (L1) of the first oscillating piston pump (2).

2. The pumping system as recited in Claim 1, **characterized in that** the circuit arrangement (19) has an integrated control unit (20) equipped in such a way that a 180° phase-displaced operation of the oscillating piston pumps (2, 3) can be switched to an electrically in-phase operation.

3. The pumping system as recited in Claim 2, **characterized in that** the circuit arrangement (19) has a first connection for connecting to a first alternating current connection (KI1) of the alternating current source and a second connection for connecting to a second alternating current connection (KI2) of the alternating current source, wherein the control unit (20) can be switched between at least two switching states and is designed in such a way that
in the first switching state, the first connection is connected via a first rectifier element (D1) with an electric inlet of the field coil (L1) of the first oscillating piston pump (2) and directly with an electric outlet of the field coil (L2) of the second oscillating piston pump (3); and that the second connection is connected via a second rectifier element (D2) with an electric inlet of the field coil (L2) of the second oscillating piston pump (3) and directly with an electric outlet of the field coil (L1) of the first oscillating piston pump (2); and that
in the second switching state one of the first and the second connection is connected via the first rectifier element (D1) with the electric inlet of the field coil (L1) of the first oscillating piston pump (2) and via the second rectifier element (D2) with the first electric inlet of the field coil (L2) of the second oscillating piston pump (3), wherein the other of the first and the second connection is connected directly with the electric outlet of the first and the second field coil (L1, L2).

4. The pumping system as recited in one of the preceding Claims, **characterized in that** at least one check valve (15, 17) is provided in the hydraulic system.

5. The pumping system as recited in Claim 4, **characterized in that** the oscillating piston pumps (2, 3) are located in one hydraulic branch respectively, and at least one of the hydraulic branches has one or several serially operated check valves (15, 17).

6. The pumping system as recited in Claim 4 or 5, **characterized in that** the check valve (15, 17) has a valve-locking element, wherein the valve-locking element is formed spherical or plate-shaped.

7. The pumping system as recited in one of the preceding Claims, **characterized in that** the oscillating piston pumps (2, 3) comprise a pressure piston (8) that is mounted on a central return spring (11).

8. A method for electrically operating two parallel hydraulically operating oscillating piston pumps (2, 3), in a pumping system as recited in one of Claims 1 through 7, wherein pistons (8) of the oscillating piston pumps (2, 3) are displaced by means of magnetic fields, wherein the electromagnetic fields in field coils (10, L1, L2) are generated by means of half-wave direct current impulse **characterized in that** the field coils (10, L1, L2) are operated electrically out of phase so that the oscillating piston pumps (2, 3) are operated with a phase displacement of 180°.

9. The method as recited in Claim 8, **characterized in that** the field coils (L1, L2) of the first and the second oscillating piston pumps (2, 3) are connected to a source of alternating current in parallel, and that the first half-wave of the alternating current is used to supply current to the field coil (L1, L2) of one of the oscillating piston pumps (2, 3) and the second half-wave of the alternating current is used to supply current to the field coil (L1, L2) of the other oscillating piston pump (2, 3).

10. The method as recited in Claim 8 or 9, **characterized in that** the first half-wave is the positive half-wave and the second half-wave is the negative half-wave of the alternating current, or that the first half-wave is the negative half-wave and the second half-wave is the positive half-wave of the alternating current.

## Revendications

1. Système de pompe (1), en particulier pour le convoyage de fluides gazeux et/ou liquides, présentant deux pompes à piston oscillant fonctionnant en parallèle par système hydraulique (2, 3) et dont les pistons (8) sont mus au moyen de champs de forces électromagnétiques, les pompes à piston oscillant (2, 3) présentant des bobines d'excitation (10, L1, L2) et les champs de forces électromagnétiques étant générés dans les bobines d'excitation (10, L1, L2) au moyen d'impulsions de courant continu à demi-ondes,
étant prévu un dispositif de circuit (19) pouvant être raccordé source de courant alternatif qui comprend deux branches électriques branchées en parallèle qui sont respectivement raccordées à la bobine d'excitation (L1, L2) d'une des pompes à piston oscillant (2, 3), le dispositif de circuit (19) étant conçu de manière à ce que les bobines d'excitation (10, L1, L2) fonctionnent en circuit contre-phrasé du point de vue électrique, de sorte que les pompes à piston oscillant (2, 3) fonctionnent avec un déphasage de 180° et,
dans la première branche et dans la seconde branche, il est respectivement prévu un élément redresseur (D1, D2) branché en série par rapport à la bobine d'excitation correspondante (10, L1, L2), les éléments redresseurs (D1, D2) ayant une polarisation opposée,
**caractérisé en ce que** le dispositif de circuit (19) présente un premier raccordement pour raccordement à un premier raccordement de courant alternatif (KI1) de la source de courant alternatif et un second raccordement pour raccordement à un second raccordement de courant affirmatif (KI2) de la source de courant alternatif et que le premier raccordement est relié par un premier élément redresseur (D1) à une entrée électrique de la bobine d'excitation (L1) de la première pompe à piston oscillant (2) et directement à une sortie électrique de la bobine d'excitation (L2) de la seconde pompe à piston alternatif (3) ; et que le second raccordement est relié par un second élément redresseur (D2) à une entrée électrique de la bobine d'excitation (L2) de la seconde pompe à piston oscillant (3) et directement à une sortie électrique de la bobine d'excitation (L1) de la première pompe à piston oscillant (2).

2. Système de pompe selon la revendication 1, **caractérisé en ce que** le dispositif de circuit (19) présente un dispositif de commutation intégré (20) qui est conçu de manière à ce qu'on puisse passer d'un fonctionnement à déphasage de 180° de la pompe à piston oscillant (2, 3) à un fonctionnement électrique monophasé.

3. Système de pompe selon la revendication 2, **caractérisé en ce que** le dispositif de circuit (19) présente un premier raccordement pour raccordement à un premier raccordement de courant alternatif (KI1) de la source de courant alternatif et un second raccordement pour le raccordement à un second raccordement de courant alternatif (KI2) de la source de courant alternatif, le dispositif de circuit (20) étant connectable au moins entre deux états de commutation et étant conçu de manière à ce que,
dans un premier état de commutation, le premier raccordement soit relié par un premier élément redresseur (D1) à une entrée électrique de la bobine d'excitation (L1) de la première pompe à piston oscillant (2) et directement à une sortie électrique de la bobine d'excitation (L2) de la seconde pompe à piston oscillant (3) ; et que le second raccordement est relié par un second élément redresseur (D2) à une entrée électrique de la bobine d'excitation (L2) de la seconde pompe à piston oscillant (3) et directement à une sortie électrique de la bobine d'excitation (L1) de la première pompe à piston oscillant (2) ; et que,
dans le second élément de commutation, un des premier et second raccordements soit relié par le premier élément redresseur (D1) à l'entrée électrique de la bobine d'excitation (L1) de la première pompe à piston oscillant (2) et par le second élément redresseur (D2) à la sortie électrique de la bobine d'excitation (L2) de la seconde pompe à piston oscillant (3), l'autre des premier et seconds raccordements étant relié directement à la sortie électrique des première et seconde bobines d'excitation (L1, L2).

4. Système de pompe selon une des revendications précédentes, **caractérisé en ce qu'**au moins une soupape anti-retour (15, 17) est prévue dans le système hydraulique.

5. Système de pompe selon la revendication 4, **caractérisé en ce que** les pompes à piston oscillant (2, 3) sont disposées respectivement dans une branche hydraulique et qu'au moins une des branches hydrauliques présente une ou plusieurs soupapes anti-retour fonctionnant en série (15, 17).

6. Système de pompe selon la revendication 4 ou 5, **caractérisé en ce que** la soupape anti-retour (15, 17) présente un élément de fermeture de soupape, l'élément de fermeture de soupape ayant une conformation en forme de boule ou de plateau.

7. Système de pompe selon une des revendications précédentes, **caractérisé en ce que** les pompes à piston oscillant (2, 3) présentent un piston de compression (8) qui s'appuie sur un ressort de rappel central (11).

8. Procédé d'entraînement hydraulique de deux pompes à piston oscillant fonctionnant en parallèle par système hydraulique (2, 3) dans un système de pompe selon une des revendications en haver aussi comment on en est quitte 1 à 7, dans lequel des pistons (8) des pompes à piston oscillant (2, 3) sont mus au moyen de champs de forces électromagnétiques, les champs de forces électromagnétiques étant générés dans des bobines d'excitation (10, L1, L2) au moyen d'impulsions de courant continu à demi-onde, **caractérisé en ce que** les bobines d'excitation (10, L1, L2) fonctionnent en commutation contre-phrasée du point de vue électrique, de sorte que les pompes à piston oscillant (2, 3) sont entraînées avec un déphasage de 180°.

9. Procédé selon la revendication 8, **caractérisé en ce que** les bobines d'excitation (L1, L2) des première et seconde pompes à piston oscillant (2, 3) sont reliées en parallèle à une source de courant alternatif et que la première demi-onde de courant alternatif est utilisée pour alimenter en courant la bobine d'excitation (L1, L2) d'une des pompes à piston oscillant (2, 3) et que la seconde demi-onde de courant affirmatif est utilisée pour alimenter en courant la bobine d'excitation (L1, L2) de l'autre des pompes à piston oscillant (2, 3).

10. Procédé selon la revendication 8 ou 9, **caractérisé en ce que** la première demi-onde est la demi-onde positive et la seconde demi-onde la demi-onde négative du courant alternatif ou que la première demi-onde est la demi-onde négative et la seconde demi-onde la demi-onde positive du courant alternatif.
